# EUROPÄISCHE PATENTSCHRIFT

(11) **EP 2 203 337 B1**
(45) Veröffentlichungstag und Bekanntmachung des Hinweises auf die Patenterteilung: **06.09.2017**
(21) Anmeldenummer: 08832026.2
(22) Anmeldetag: 17.09.2008
(51) Int. Cl.: B60T 17/22, B60T 17/20, B60T 7/12

(54) **VERFAHREN ZUR ANPASSUNG WENIGSTENS EINES PARAMETERS IN EINEM GESTEUERTEN ODER GEREGELTEN SYSTEM EINES FAHRZEUGS**
METHOD FOR ADAPTING AT LEAST ONE PARAMETER IN A CONTROLLED SYSTEM OF A VEHICLE
PROCÉDÉ D'ADAPTATION D'AU MOINS UN PARAMÈTRE DANS UN SYSTÈME ASSERVI OU RÉGULÉ D'UN VÉHICULE

(30) Priorität: 19.09.2007 DE 102007044575
(43) Veröffentlichungstag der Anmeldung: 07.07.2010
(73) Patentinhaber: KNORR-BREMSE Systeme für Schienenfahrzeuge GmbH, 80809 München (DE)
(72) Erfinder: WALTER, Manfred, 85375 Neufahrn (DE)
(74) Vertreter: Schönmann, Kurt
(86) Internationale Anmeldenummer: PCT/EP2008/007763
(87) Internationale Veröffentlichungsnummer: WO 2009/036960

(56) Entgegenhaltungen:
- EP-A- 0 491 172
- GB-A- 2 371 121
- US-A1- 2004 238 693
- US-A1- 2007 142 984

## Beschreibung

### Stand der Technik

Die Erfindung geht aus von einem Verfahren zur Anpassung wenigstens eines Parameters in einem gesteuerten oder geregelten System eines Schienenfahrzeugs, gemäß dem Oberbegriff von Anspruch 1.

Moderne Fahrzeuge weisen oft gesteuerte oder geregelte Systeme auf, welche bestimmte Reaktionen entweder fahrerbetätigt oder auch automatisch auslösen. Bei Schienenfahrzeugen ist ein solches System beispielsweise eine Vorrichtung zur Entgleisungsdetektion, wobei ein Schwellwert für die Auslösung eines Detektionssignals für eine Entgleisung festgelegt werden muss. Weiterhin sind bei Schienenfahrzeugen auch meist eine Notbremsvorrichtung zur schnellen Einbremsung sowie eine Geschwindigkeitsregelvorrichtung zur Regelung der Fahrgeschwindigkeit vorhanden. Die Parameter innerhalb solcher gesteuerter oder geregelter Systeme wie beispielsweise Sollwerte oder Schwellwerte, mit welchen Istwerte verglichen werden, sind üblicherweise fest vorgegebene Größen, welche nach einer Programmierung des Systems nicht mehr verändert werden, auch wenn sich die Randbedingungen, denen das Fahrzeug im Betrieb ausgesetzt ist, streckenabhängig ändern.

Ein gattungsgemäßes Verfahren ist aus der US 2004/238693 A1 bekannt.

Der Erfindung liegt demgegenüber die Aufgabe zugrunde, ein Verfahren bereitzustellen, mit welchem Fehlauslösungen von Entgleisungsdetektoren verhindert werden.

Erfindungsgemäß wird diese Aufgabe durch die Merkmale des Patentanspruchs 1 gelöst.

### Offenbarung der Erfindung

Gemäß Anspruch 1 wird ein Verfahren zur Anpassung wenigstens eines Parameters in einem gesteuerten oder geregelten System eines Schienenfahrzeugs vorgeschlagen, wobei wenigstens einigen von möglichen Positionen des Schienenfahrzeugs innerhalb eines von dem Schienenfahrzeug befahrbaren Streckennetzes wenigstens eine positionsbezogene Randbedingung des Streckennetzes zugeordnet wird und der wenigstens eine Parameter in dem gesteuerten oder geregelten System des Schienenfahrzeugs während der Fahrt in Abhängigkeit von der aktuellen Position des Schienenfahrzeugs anhand der dort vorliegenden positionsbezogenen Randbedingung angepasst wird.

Mit dem Verfahren ergibt sich folglich die Möglichkeit, Parameter in einem gesteuerten oder geregelten System eines Schienenfahrzeugs abhängig von der gerade vorliegenden Position des Schienenfahrzeugs innerhalb des Streckennetzes an die an dieser Position vorliegenden Randbedingungen anzupassen. Je nach Parameter kann dies beispielsweise zu einer Erhöhung der Betriebssicherheit oder zu einer Reduzierung des Energieverbrauchs des Fahrzeugs führen.

Das Verfahren ist daher zur Anpassung wenigstens eines Parameters in einem gesteuerten oder geregelten System eines innerhalb eines Schienenstreckennetzes betriebenen Schienenfahrzeugs vorgesehen.

Wenn das gesteuerte oder geregelte System eine Vorrichtung zur Entgleisungsdetektion des Schienenfahrzeugs beinhaltet, wird ein Schwellwert für die Auslösung eines Detektionssignals für eine Entgleisung abhängig von der aktuellen Position des Schienenfahrzeugs angepasst. Insbesondere wird ein Schwellwert für die Auslösung des Detektionssignals abhängig von der Streckencharakteristik angepasst und beispielsweise auf schlecht gewarteten Schienennebenstrecken des Schienenstreckennetzes höher gesetzt als bei gut gewarteten Schienenhauptstrecken.

Durch die in den Unteransprüchen aufgeführten Maßnahmen sind vorteilhafte Weiterbildungen und Verbesserungen der im unabhängigen Anspruch angegebenen Erfindung möglich.

Besonders bevorzugt wird die aktuelle Position des Schienenfahrzeugs in dem Streckennetz durch ein Global Positioning System (GPS) ermittelt. Solche Systeme sind inzwischen am Markt gängig und stellen vergleichsweise kostengünstige und genaue Mittel zur Positionsbestimmung von Fahrzeugen dar.

In diesem Fall kann die wenigstens eine positionsbezogene Randbedingung beispielsweise eine Information aus der folgenden Gruppe von Informationen sein: Die Steigung oder das Gefälle, die Qualität, der Wartungszustand des Schienenstreckennetzes an einer bestimmten Position oder das Vorhandensein eines Tunnels oder einer Brücke an einer bestimmten Position des Schienenstreckennetzes.

## Patentansprüche

1. Verfahren zur Anpassung wenigstens eines Parameters in einem gesteuerten oder geregelten System eines Schienenfahrzeugs, wobei wenigstens einigen von möglichen Positionen des Schienenfahrzeugs innerhalb eines von dem Schienenfahrzeug befahrbaren Streckennetzes wenigstens eine positionsbezogene Randbedingung des Streckennetzes zugeordnet wird und der wenigstens eine Parameter in dem gesteuerten oder geregelten System des Schienenfahrzeugs während der Fahrt in Abhängigkeit von der aktuellen Position des Schienenfahrzeugs anhand der dort vorliegenden positionsbezogenen Randbedingung angepasst wird, **dadurch gekennzeichnet, dass** das gesteuerte oder geregelte System eine Vorrichtung zur Entgleisungsdetektion des Schienenfahrzeugs beinhaltet, wobei ein Schwellwert für die Auslösung eines Detektionssignals für eine Entgleisung abhängig von der aktuellen Position des Schienenfahrzeugs angepasst wird.

2. Verfahren nach Anspruch 1, **dadurch gekennzeichnet, dass** die aktuelle Position des Schienenfahrzeugs in dem Streckennetz durch ein Global Positioning System (GPS) ermittelt wird.

3. Verfahren nach Anspruch 1 oder 2, **dadurch gekennzeichnet, dass** die wenigstens eine positionsbezogene Randbedingung eine Information aus der folgenden Gruppe von Informationen ist: Die Steigung oder das Gefälle, die Qualität, der Wartungszustand des Schienenstreckennetzes an einer bestimmten Position, das Vorhandensein eines Tunnels oder einer Brücke an einer bestimmten Position des Schienenstreckennetzes.

## Claims

1. Method for adapting at least one parameter in an open- or closed-loop-controlled system of a rail vehicle, wherein at least one position-related peripheral condition of a route network is assigned to at least some of the possible positions of the rail vehicle within the route network which can be travelled along by the vehicle, and the at least one parameter is adapted in the open- or closed-loop-controlled system of the rail vehicle during the journey as a function of the current position of the rail vehicle on the basis of the position-related peripheral condition present there, **characterised in that** the open- or closed-loop-controlled system comprises a device for detecting the derailing of the rail vehicle, wherein a threshold value for the triggering of a detection signal for derailing is adapted as a function of the current position of the rail vehicle.

2. Method according to claim 1, **characterised in that** the current position of the rail vehicle in the route network is determined by a global positioning system (GPS).

3. Method according to claim 1 or 2, **characterised in that** the at least one position-related peripheral condition is an information item from the following group of information items: the positive gradient or the negative gradient, the quality, the maintenance state of the rail network at a specific position, the presence of a tunnel or of a bridge at a specific position on the rail network.

## Revendications

1. Procédé d'adaptation d'au moins un paramètre d'un système commandé ou régulé d'un véhicule ferroviaire, dans lequel on associe, à au moins certaines positions possibles du véhicule ferroviaire dans un réseau de voies pouvant être parcouru par le véhicule ferroviaire, une condition aux limites, rapportée à la position, du réseau de voies et on adapte, pendant le trajet, en fonction de la position en cours du véhicule ferroviaire, à l'aide de la condition aux limites rapportée à la position qui y est présente, le au moins un paramètre du système commandé ou régulé du véhicule ferroviaire, **caractérisé en ce que** le système commandé ou régulé comporte un dispositif de détection de déraillement du véhicule ferroviaire, une valeur de seuil, pour le déclenchement d'un signal de détection d'un déraillement, étant adaptée en fonction de la position en cours du véhicule ferroviaire.

2. Procédé suivant la revendication 1, **caractérisé en ce que** l'on détermine la position en cours du véhicule ferroviaire dans le réseau de voies par un Global Positioning System (GPS).

3. Procédé suivant la revendication 1 ou 2, **caractérisé en ce que** la au moins une condition aux limites rapportée à la position est une information choisie dans le groupe d'information : la montée ou la descente, la qualité, l'état d'entretien du réseau de voies ferrées en une position déterminée, la présence d'un tunnel ou d'un pont en une position déterminée du réseau de voies ferrées.
